(19) **Europäisches Patentamt / European Patent Office / Office européen des brevets**

(11) **EP 2 219 316 A1**

(12) **EUROPEAN PATENT APPLICATION**

(43) Date of publication:
**18.08.2010 Bulletin 2010/33**

(51) Int Cl.:
*H04L 5/00* (2006.01)     *H04B 3/32* (2006.01)

(21) Application number: **09290107.3**

(22) Date of filing: **13.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Alcatel Lucent**
**75008 Paris (FR)**

(72) Inventors:
• **Maes, Jochen**
**2431 Veerle (BE)**

• **Nuzman, Carl J.**
**07083 Union, NJ (US)**
• **De Lind van Wijngaarden, Adriaan J.**
**07974 New Providence, NJ (US)**

(74) Representative: **Anderlini, Alain et al**
**Alcatel-Lucent Bell NV**
**Copernicuslaan 50**
**2018 Antwerpen (BE)**

(54) **Method and apparatus for assigning pilot sequences for further crosstalk evaluation**

(57) The present invention relates to a method for assigning pilot sequences to communication channels for further evaluation of crosstalk characteristics there between, and comprising the steps of:
- selecting active pilot sequences (S1; S2; SN) for active disturber channels (Ch1; Ch2; ChN) from a set (SET1) of mutually orthogonal pilot sequences of length L,
- identifying a joining disturber channel (ChJ) as a communication channel in the process of becoming active.

A method according to the invention further comprises the step of selecting a joining pilot sequence (SJ) for said joining disturber channel which comprises at least one subsequence (SSJ,1) of length M lower than L that is orthogonal to respective ones of corresponding active sub-sequences (SS1,1; SS2,1; SSN,1) of length M to be concurrently transmitted as part of said active pilot sequences.

The present invention also relates to a configuration unit. Such a configuration unit may for part of a DSLAM, a mobile or wireless base station, an optical network unit, or a network manager.

Fig. 3

Printed by Jouve, 75001 PARIS (FR)

**Description**

The present invention relates to a method for assigning pilot sequences to communication channels for further evaluation of crosstalk characteristics there between.

Crosstalk (or inter-channel interference) is a major source of channel impairment for Multiple Inputs Multiple Outputs (MIMO) communication systems, such as Digital Subscriber Line (DSL) communication systems.

As the demand for higher data rates increases, DSL systems are evolving toward higher frequency bands, wherein crosstalk between neighboring transmission lines (that is to say, transmission lines that are in close vicinity) is more pronounced (the higher frequency, the more coupling).

A MIMO system can be described by the following linear model:

$$Y(f)=H(f)X(f)+Z(f) \quad (1)$$

wherein the N-component complex vector X, respectively Y, denotes a discrete frequency representation of the symbols transmitted over, respectively received from, the N channels, wherein the N-component complex vector **z** denotes some additional noise present over the N channels, such as alien interference, thermal noise and Radio Frequency Interference (RFI),

and wherein the NxN complex matrix **H** is referred to as the channel matrix. The (i,j)-th component of the channel matrix H describes how the communication system produces a signal on the i-th channel output in response to a symbol being transmitted to the j-th channel input. The diagonal elements of the channel matrix describe direct channel coupling, and the off-diagonal elements of the channel matrix describe inter-channel coupling.

Different strategies, referred to as Dynamic Spectrum Management (DSM), have been developed to mitigate crosstalk and to maximize effective throughput and line stability. DSM is gradually evolving from spectral management techniques (DSM level 0-2) to multi-user signal coordination (DSM level 3).

One technique for reducing inter-channel interference is joint signal precoding. With precoding, signals are passed together through a precoding matrix before being transmitted over the respective communication channels. The precoding matrix is such that the concatenation of the precoder and the communication channel results in little or no interference at the receiver.

Another technique for reducing inter-channel interference is joint signal post-processing, that is to say the received data symbols are passed together through a crosstalk cancellation matrix before being detected.

Signal precoding and signal post-processing are typically performed at a central location, e.g. at an access node, whereat all the data symbols that are to be simultaneously transmitted, or that have been simultaneously received, are available. For instance, signal precoding is particularly suited for DSL downstream communication, whereas signal post-processing is particularly suited for DSL upstream communication.

The performance of signal precoding and post-processing depends critically on the component values of the precoding and cancellation matrix respectively, which component values are to be computed and updated according to the actual crosstalk that is impairing the communication system.

A prior art method for estimating the crosstalk coefficients comprises the steps of:

- transmitting a plurality of mutually orthogonal crosstalk pilot sequences of length L through respective ones of a plurality of disturber channels,
- measuring crosstalk induced over a victim channel while the pilot sequences are being transmitted,
- correlating the crosstalk measurements with respective ones of the plurality of crosstalk pilot sequences, thereby yielding a plurality of correlated crosstalk measurements,
- estimating the crosstalk coefficients from the plurality of disturber channels into the victim channel based on respective ones of the plurality of correlated crosstalk measurements.

That is, an access node sends mutually orthogonal pilot signals downstream, one on each line. Error samples (measuring both interference and noise) are fed back to the access node. Error samples contain both amplitude and phase information on a per-tone basis, or on a per-group-of-tones basis. The error samples are correlated with the pilot sequences in order to obtain crosstalk estimates. The process can be repeated as needed to obtain more and more accurate estimates.

This prior art method is described in a new recommendation currently edited by the International Telecommunication Union (ITU), for use with VDSL2 transceivers (G.993.2, February 2006), and temporarily referred to as G.vector.

In G.vector, it is currently envisaged that the pilot signals would be sent on the so-called sync symbols. The sync symbols occur periodically, after every 256 data symbols, that is to say once every 257 x 0,250 = 64,25 ms. On a given line, all active sub-carriers are modulated by two bits from the sync frame (either '00' or '11' for all active sub-carriers) using 4-QAM. Each sub-carrier thus transmits one of two complex constellation points during the sync symbol, either '00' corresponding to the complex constellation point '1 + j', or '11' corresponding to '-1 - j'. To simplify notation in the remainder of this document, we will represent these two values by '1' and '-1' respectively. Normally, the value transmitted is the same from sync symbol to sync symbol. However, occasionally, the value is changed from 1 to -1 or vice versa. Such a transition is interpreted by the receiver as a control signal, called a sync-flag, typically used for acknowledgment.

The orthogonality requirement implies that the length of the pilot sequences is lower-bounded by the maximum number of channels to be jointly processed: the more channels, the more lengthy the pilot sequences, the longer the estimation of the crosstalk coefficients.

If a line comes into service (e.g., after a modem start-up at the subscriber premises), the crosstalk coefficients need to be estimated first before the line can join the precoding (or post-processing) group of active lines, else the raising interference may bring about a line retrain on a few active lines (if the newly induced interference exceeds the configured noise margin). Consequently, the time required for joining grows with the number of lines. For a large precoding group (e.g., 48 or 64 lines), this adds an undesirable delay of several seconds into the initialization time.

It is an object of the present invention to shorten the time required for joining a new channel to an existing precoding (or post-processing) group, as well as to shorten the initialization time over the joining channel.

The objectives of the present invention are achieved and the aforementioned shortcomings of the prior art are overcome by a method for assigning pilot sequences to communication channels for further evaluation of crosstalk characteristics there between, and comprising the steps of:

- selecting active pilot sequences for active disturber channels from a set of mutually orthogonal pilot sequences of length L,
- identifying a joining disturber channel as a communication channel in the process of becoming active,
- selecting a joining pilot sequence for said joining disturber channel which comprises at least one sub-sequence of length M lower than L that is orthogonal to respective ones of corresponding active sub-sequences of length M to be concurrently transmitted as part of said active pilot sequences.

The main idea of this invention is to use sequences of different lengths. Long sequences of length $L \geq N$, where N denotes the maximum number of channels to be jointly processed, are used by active lines. A small number of short sequences of length $M \ll L$ are reserved for use by joining lines. The sequences are designed such that:

- Long sequences are orthogonal to each other.
- Short sequences are orthogonal to each other.
- short sequences are orthogonal to the corresponding sub-sequences of each long sequence.

Unbiased estimates of the crosstalk coefficients from the joining line into the active lines can then be obtained quickly. The estimates are unbiased because each short sequence is exactly orthogonal to all the sub-sequences of length M that are being transmitted on the active channels.

In the prior art method, the length of the pilot sequences is prescribed by the maximum size of the precoding (or post-processing) group. With the present invention, the length is determined by construction to achieve a good balance between effectiveness and a certain degree of accuracy.

For instance, a short sequence of length 8 or 12 is sufficient for obtaining rather accurate crosstalk estimates, and for efficiently cancelling the crosstalk induced by a joining channel (that is to say, within the boundary of the configured noise margin).

A method according to the invention is advantageous in that the joining time is reduced by an order of magnitude, and is independent from the maximum size of the precoding (or post-processing) group.

In a typical scenario of say 48 lines, one might expect estimation to take approximately 4 seconds. With the present invention, half a second would be required with short sequences of say 8 symbols.

Various methods can be used for constructing joining pilot sequences that obey the above rules.

In a first embodiment, said joining pilot sequence is a periodic repetition of said at least one sub-sequence.

Alternatively, the joining pilot sequence may comprise two or more successive distinct patterns, possibly of different lengths, each pattern being orthogonal to each of the corresponding patterns of the active pilot sequences.

In a second embodiment, said joining pilot sequence further comprises an inactive part during which no pilot signal is to be transmitted through said joining disturber channel.

Alternatively, the joining pilot sequence may further comprise an arbitrary pattern (e.g., because the temporary shutoff of an active tone is disallowed) during which no crosstalk observation shall take place (e.g., for tracking the crosstalk coefficients between active lines, or for estimating the crosstalk coefficients from another joining line into the active lines), else an estimation of the crosstalk coefficients based on those observations would be biased.

Joining pilot sequences according to the invention can be obtained inter alia by mathematical derivation from a Hadamard matrix.

A further embodiment of a method according to the invention further comprises the steps of:

- selecting a further active pilot sequence for said joining disturber channel from said set of mutually orthogonal pilot sequences,
- re-assigning said joining pilot sequence to another communication channel in the process of becoming active.

A joining line starts using a short sequence for quick estimation of the crosstalk coefficients from this joining line into the active lines, and uses a long sequence thereafter.

This embodiment is further advantageous in that short sequences are kept available for the next coming joining channels, as short sequences are rather scarce resources.

Still a further embodiment of a method according to the invention further comprises the steps of:

- identifying a further joining disturber channel as a further communication channel in the process of becoming active,
- selecting a further joining pilot sequence for said further joining disturber channel which comprises at least one further sub-sequence of length P lower than L that is orthogonal to respective ones of corresponding active further sub-sequences of length P to be concurrently transmitted as part of said active pilot sequences, wherein said further joining pilot sequence further comprises a further inactive part during which no pilot signal is to be transmitted through said further joining disturber channel, and wherein said at least one sub-sequence and said at least one further sub-sequence do not overlap.

The joining pilot sequence comprises a short sequence, and an inactive (or silent) part during which no pilot signal is to be transmitted through the joining channel. One can thus obtain multiple joining pilot sequences from the same sub-sequence, e.g. by successive time-shifts of a single sub-sequence within the joining pilot sequence, while the crosstalk estimates remain still unbiased. The selection of such a joining pilot sequence shall take duly account of the timing between the joining event and the scheduled transmission of the sub-sequence.

The present invention also relates to a configuration unit for assigning pilot sequences to communication channels for further evaluation of crosstalk characteristics there between.

A configuration unit according to the invention comprises:

- a selector adapted to select active pilot sequences for active disturber channels from a set of mutually orthogonal pilot sequences of length L,
- a detector adapted to identify a joining disturber channel as a communication channel in the process of becoming active, wherein said selector is further adapted to select a joining pilot sequence for said joining disturber channel which comprises at least one sub-sequence of length M lower than L that is orthogonal to respective ones of corresponding active sub-sequences of length M to be concurrently transmitted as part of said active pilot sequences.

Such a configuration unit may form part of an access node, such as a Digital Subscriber Line Access Multiplexer (DSLAM), being located at a central location or at a remote location closer to the subscriber premises, a wireless or mobile base station, an optical network unit, etc.

The configuration unit may also form part of a network manager to be coupled through a data communication network to an access node, and adapted to operate the access node according to the invention.

Embodiments of a method according to the invention correspond with the embodiments of a configuration unit according to the invention.

The above and other objects and features of the invention will become more apparent and the invention itself will be best understood by referring to the following description of an embodiment taken in conjunction with the accompanying drawings wherein:

- fig. 1 represents a multi-channel communication system,
- fig. 2 represents a DSLAM according to the invention,
- fig. 3 represents active and joining pilot sequences.

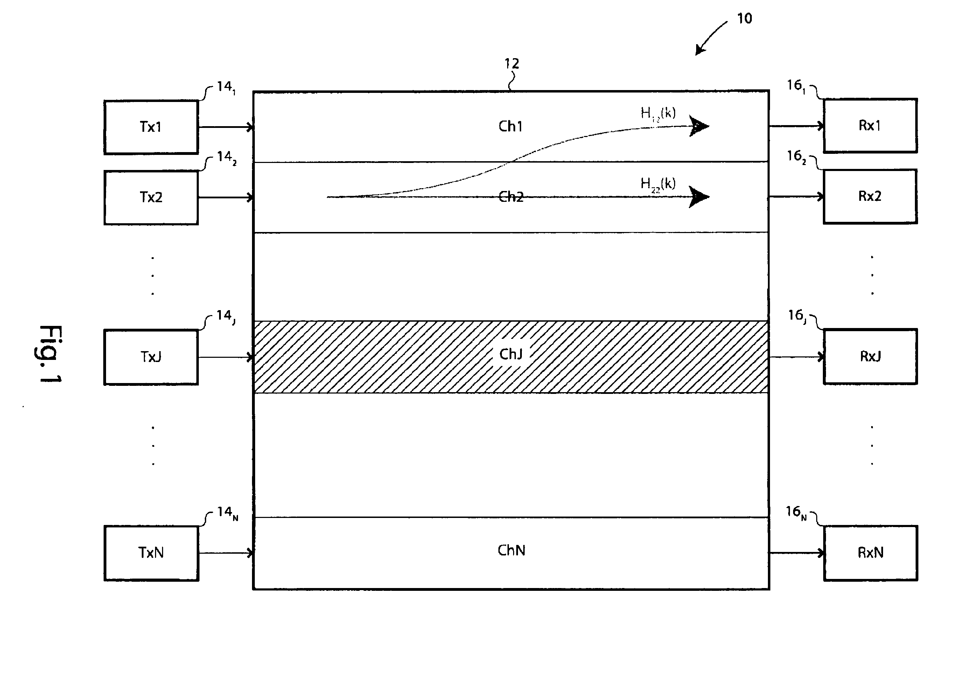

There is seen in fig. 1 a multi-channel communication system 10 comprising:

- a physical transmission medium 12,

- N single-channel transmitters $14_1$ (Tx1) to $14_N$ (TxN),
- N single-channel receivers $16_1$ (Rx1) to $16_N$ (RxN).

The physical transmission medium 12 supports direct point-to-point communication channels Ch1 to ChN between a corresponding one of the transmitters 14 and a corresponding one of the receivers 16. Each communication channel supports the forward transport of communication signals from a corresponding transmitter to a corresponding receiver. In some embodiments, the channels Ch1 to ChN may also support communication in the reverse direction.

The transfer function from channel Chj into channel Chi is denoted as Hij(k), k denoting a frequency index. The direct channel transfer function H22(k) of channel Ch2 and the crosstalk channel transfer function H12(k) from channel Ch2 into channel Ch1 have been drawn for illustrative purpose.

The multi-channel communication system 10 may have a large variety of specific implementations.

In a first embodiment, the multi-channel communication system 10 includes subscriber loops, typically unshielded Twisted copper Pairs (UTP), as the physical transmission medium 12. Each subscriber loop forms a direct channel between a corresponding one of the transmitters 14 and a corresponding one of the receivers 16. For downstream communication, a DSLAM functions as the transmitters 14, and DSL modems at subscriber premises function as respective ones of the receivers 16. For upstream communication, the DSL modems at subscriber premises function as respective ones of the transmitters 14, and the DSLAM functions as the receivers 16. Crosstalk herein refers to interference between subscriber loops that share a common binder over a significant part of their total length.

In a second embodiment, the multi-channel communication system 10 includes an optical transmission line as the physical transmission medium 12. Each modulated light beam of a particular wavelength forms a direct channel between a corresponding one of the transmitters 14 and a corresponding one of the receivers 16. A multi-wavelength optical transmitter functions as the transmitters 14, and a multi-wavelength optical receiver functions as the receivers 16. Crosstalk herein refers to optical interference between closely spaced wavelengths.

In a third embodiment, the multi-channel communication system 10 is a wireless or mobile communication system, and the atmosphere functions as the physical transmission medium 12. Each modulated radio-frequency carrier forms a direct channel between a corresponding one of the transmitters 14 and a corresponding one of the receivers 16. For downstream communication, a mobile or wireless base station functions as the transmitters 14, and subscriber wireless or mobile terminals function as respective ones of the receivers 16. For upstream communication, the subscriber wireless or mobile terminals function as respective ones of the transmitters 14, and the mobile or wireless base station functions as the receivers 16. crosstalk herein refers to radio interference between radio channels.

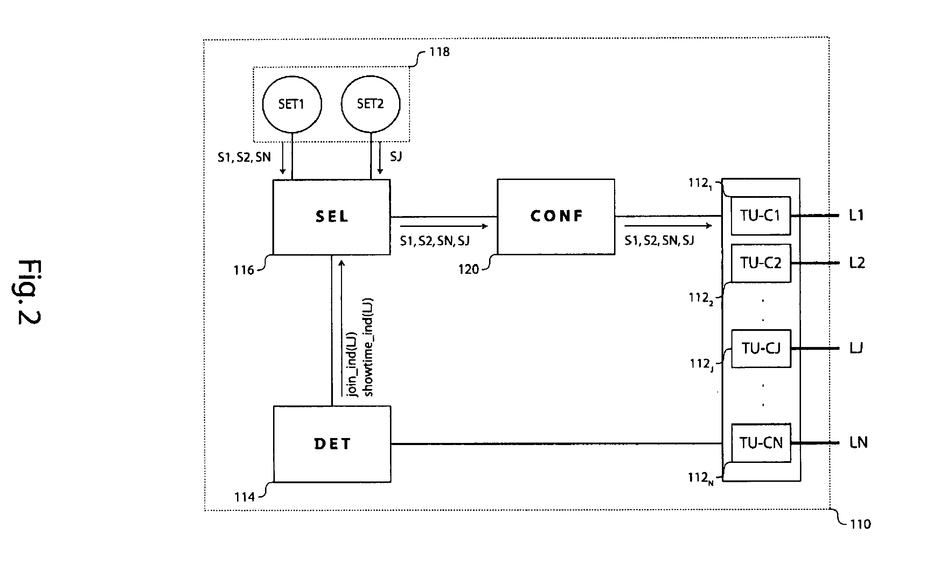

There is seen in fig. 2 a DSLAM 110 as a specific implementation of the present invention, and comprising the following noticeable functional blocks:

- N DSL transceiver units $112_1$ (TU-C1) to $112_N$ (TU-CN), for connecting to subscriber loops L1 to LN respectively,
- a detector 114 (DET), for detecting the initialization of a DSL communication path over a subscriber loop, for instance by detecting the receipt of a R-TONES-REQ signal as defined in G.994.1 over a subscriber loop, and further to detect the subscriber loop entering the so-called show-time mode, that is to say the completion of the initialization procedure and the transmission of payload traffic,
- a selector 116 (SEL), for selecting the right pilot sequence to be transmitted over a subscriber loop depending on whether the line is initializing or is active,
- a data repository 118, for holding in non-volatile memory a set S1 of mutually orthogonal active pilot sequences, and a further set S2 of joining pilot sequences according to the invention,
- a configuration agent 120 (CONF), for configuring the transceiver units 112 with their respective pilot sequences, and more specifically for initializing the pilot sequence to be used over a particular subscriber loop in upstream or downstream direction, and for changing the pilot sequence on-line.

The transceiver units 112 are coupled to the detector 114 and to the configuration agent 120. The selector 116 is coupled to the detector 114, to the data repository 118 and to the configuration agent 120.

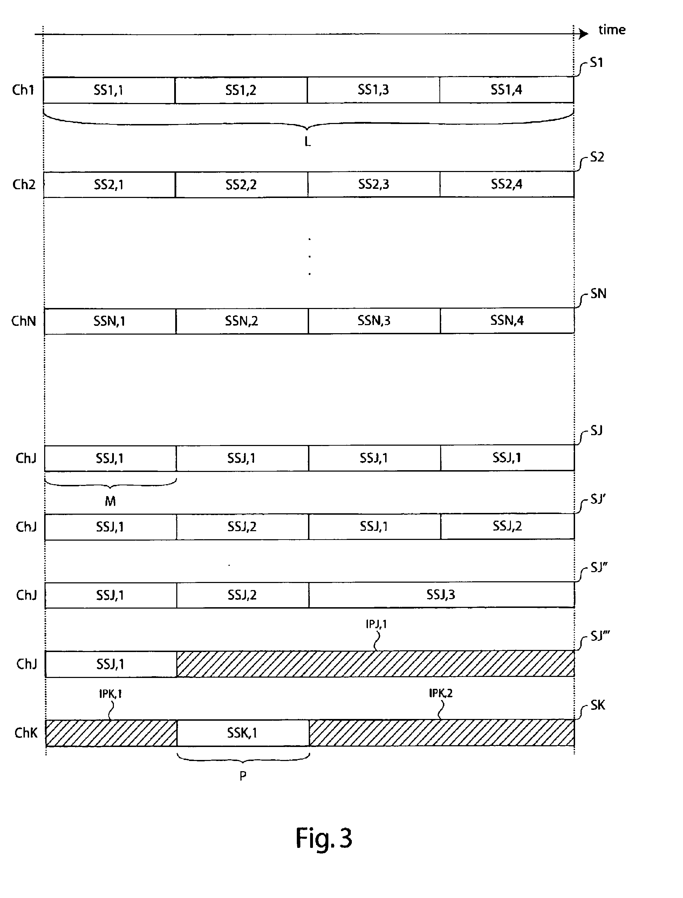

The lines L1 to LN in fig. 2 are to be construed as the channels Ch1 to ChN in fig. 1 and 3.

An operation of the DSLAM 110 now follows with reference to fig. 2.

Lines L1, L2 and LN are assumed to be active and to be part of a precoding group, and line LJ is assumed to be in the process of becoming active.

Initially, lines L1, L2 and LN are assigned active pilot sequences from the set SET1 of active pilot sequences. The active pilot sequences are marked as busy in the data repository 118, and are used for tracking any change in the crosstalk coefficients.

The detector 114 detects the receipt of a R-TONES-REQ signal over a line, presently line LJ, and notifies the selector 116 about this event (see join_ind(LJ) in fig. 2). Thereupon, the selector 116 selects a free joining pilot sequence, presently the joining pilot sequence SJ, from the set SET2 of joining pilot sequences. The selector 116 marks the joining pilot sequence SJ as busy in the data repository 118, and requests the configuration agent 120 to configure the transceiver unit $112_J$ coupled to line LJ with the pilot sequence SJ. The transceiver unit $112_J$ transmits the pilot sequence SJ during the initialization phase referred to as O-P-VECTOR1 in G.vector, which phase taking place after the handshake phase. The crosstalk coefficients from line LJ into lines L1, L2 and LN can be estimated quickly on account of the sub-orthogonality property of the joining pilot sequence LJ. From this time onwards, line LJ can be joined to the precoding group and the crosstalk induced by line LJ over lines L1, L2 and LN can be pre-compensated.

Next, the detector 114 detects line LJ switching into show-time mode. The detector 114 notifies the selector 116 about this event (see showtime_ind(LJ) in fig. 2). Thereupon, the selector 116 selects a free active pilot sequence from the set SET1. The selector 116 marks that active pilot sequence as busy, and requests the configuration agent 120 to configure the transceiver unit $112_J$ with that active pilot sequence. Eventually, the selector 116 marks the joining pilot sequence SJ as free in the data repository 118 for use by a further joining line.

Alternatively, the detector 114 may detect the completion of the step of determining the crosstalk coefficients from the joining line into the respective active lines, presently from line LJ into lines L1, L2 and LN. The selector 116 and the configuration agent 120 are then configured for changing the pilot sequence over the joining line from that time onwards without waiting for the completion of the initialization procedure over the joining line, thereby increasing the rate at which new channels can join the precoding (or post-processing) group by promptly releasing the joining pilot sequence, presently SJ, for use by a new joining line. If so, the detector 114 is to be coupled to some crosstalk estimator (not shown).

Still alternatively, the detector 114 may detect the completion of the step of observing (or measuring) the crosstalk induced by the joining pilot sequence over the respective active lines. The selector 116 and the configuration agent 120 are then configured for changing the pilot sequence over the joining line from that time onwards, thereby increasing at a further extent the joining rate.

The detector 114 may be further arranged for detecting a line becoming inactive, and for notifying accordingly the selector 116. Thereupon, the selector 116 marks the corresponding pilot sequence as free for further assignment.

In another specific implementation of the present invention (not shown), the detector 114, the selector 116, the data repository 118 and the configuration agent 120 form part of a network manager to be coupled to an access node through a data communication network. The access node comprises a local detector for notifying line events through the data communication network to the central detector 114, and a local configuration agent for locally configuring pilot sequences under control of the central configuration agent 120. Remote configuration of the pilot sequences can be achieved by means of e.g. simple Network Management Protocol (SNMP). The network manager and the access node make use of public loop identifiers for unambiguously identifying subscriber loops, to which notifications and configuration commands relate.

There is seen in fig. 3 pilot sequences assigned to respective communication channels, and plotted versus time.

A pilot sequence Sn, where n denotes any channel index ranging from 1 to N, is a sequence of complex constellation points to be transmitted through channel Chn during the sync symbol, and is denoted as Sn(l,k), where l denotes a transmission index or time index or alike, and k denotes a sub-carrier (or tone) index.

The pilot sequences are assumed to be of length L, and to use the same complex value across all active sub-carriers, although this is not a requirement for the present invention. The index k will therefore be omitted in the remainder.

The active pilot sequences S1, S2 and SN are mutually orthogonal active pilot sequences. The orthogonality requirement is expressed by:

$$\sum_{l=1}^{L} Sn(l)Sm(l)^{*} = 0 \quad (2)$$

whenever n is not equal to m, and wherein * denotes the complex conjugate.

The active pilot sequences are split into K sub-sequences of length M = L/K. Presently, K = 4, and the sub-sequences are respectively denoted as SSn,1, SSn,2, SSn,3 and SSn,4.

In a first embodiment, the joining pilot sequence SJ is a periodic repetition of a sub-sequence SSJ,1 that satisfies the following sub-orthogonality requirement:

$$\sum_{l=1+kM}^{(k+1)M} SJ(l)Sm(l)^{*} = 0 \quad (3)$$

for m not equal to J, and for k ranging from 0 to K-1.

In a second embodiment, the joining pilot sequence SJ' is a periodic repetition of 2 successive sub-sequences, the sub-sequence SSJ,1 and another distinct sub-sequence SSJ,2 of length M. Both sub-sequences are such that the resulting joining pilot sequence still satisfies the sub-orthogonality requirement (3).

In a third embodiment, the joining pilot sequence SJ" comprises SSJ,1 and SSJ,2 as first and second sub-sequence respectively, and a third distinct sub-sequence SSJ,3 of length 2M. The resulting joining pilot sequence satisfies the following sub-orthogonality requirement:

$$\sum_{l=1}^{M} SJ''(l)Sm(l)^* = 0$$

$$\sum_{l=1+M}^{2M} SJ''(l)Sm(l)^* = 0 \quad (4)$$

$$\sum_{l=1+2M}^{4M} SJ''(l)Sm(l)^* = 0$$

for m not equal to J.

In a fourth embodiment, the sub-sequence SSJ,3 is an arbitrary pattern that is not orthogonal to at least one corresponding active sub-sequence, i.e.:

$$\sum_{l=1+2M}^{4M} SJ''(l)Sm(l)^* \neq 0 \quad (5)$$

for at least one m not equal to J.

In a fifth embodiment, the joining pilot sequence SJ''' comprises the sub-sequence SSJ,1 and an inactive part IPJ,1 of length 3M, during which no pilot signal is to be transmitted over the joining channel ChJ. A further joining pilot sequence SK to be assigned to a further joining channel ChK comprises a first inactive part IPK,1 of length M, a sub-sequence SSK,1 of length P, and a second inactive part IPK,2 of length L-M-P. The sub-sequences SSJ,1 and SSK,1 do not overlap.

For instance, the sequence SK can be a time-shifted version of the sequence SJ''' by M, 2M, ..., (K-1)M pilot symbols respectively, thereby yielding K different joining pilot sequences that uses the same sub-sequence, presently SSJ,1. If so, the selector 114 is further adapted to select a joining pilot sequence such that O-P-VECTOR1 starts before the scheduled transmission of the sub-sequence, e.g. by taking duly account of the duration of the handshake procedure.

The derivation of active and joining pilot sequences according to the invention will now be made explicit with reference to numerical examples. This derivation use Hadamard matrixes and the so-called Kronecker product, denoted as ⊗.

In mathematics, a Hadamard matrix is a square matrix whose entries are either +1 or -1, and whose rows are mutually orthogonal. An $N \times N$ Hadamard matrix HN, wherein N denotes the order of the Hadamard matrix and is a power of 2, can be described recursively as:

$$HN = H2 \otimes HN/2, \text{ and } H_2 = \begin{bmatrix} 1 & 1 \\ 1 & -1 \end{bmatrix} \quad (6)$$

More generally, if A is an $N1 \times M1$ matrix describing N1 mutually orthogonal sequences of length M1, and if B is an $N2 \times M2$ matrix describing N2 mutually orthogonal sequences of length M2, then the Kronecker product $C = A \otimes B$ is an $(N1N2) \times (M1M2)$ matrix describing N1N2 mutually orthogonal sequences of length M1M2.

Let Q be any $16 \times 16$ matrix of mutually orthogonal sequences, for example H16. Remove one sequence V from Q, thereby yielding a new matrix B of dimension 15 x 16.

Then, let A be any $4 \times 4$ matrix of mutually orthogonal sequences, for example H4.

Now the matrix $C = A \otimes B$ describes 60 mutually orthogonal sequences of length 64. Each of these sequences consists of four consecutive sub-sequences of length 16. Each sub-sequence is a multiple of a row of B, and so it is orthogonal to v.

The rows of C are assigned to active lines, and thus make up the set S1. The joining pilot sequence(s) built from the sub-sequence v make up the set S2.

If 2 sequences V1 and v2 are removed from Q then one obtains 56 mutually orthogonal sequences of length 64, wherein each sub-sequence of length 16 is orthogonal to either V1 or v2 sub-sequences, and wherein V1 and v2 sub-sequences are mutually orthogonal to each other.

Similarly, you could have A be $8 \times 8$ and B be $7 \times 8$, obtaining 56 mutually orthogonal sequences of length 64, such that the sub-sequences are orthogonal to a special sequence of length 8. At the cost of somewhat reducing the number of available joining pilot sequences, one has shorter sub-sequences and thus shorter joining time.

Another consideration is the timing of the joining procedure in order to observe an orthogonal set. In the prior art situation, where long sequences of the same length are used, the entire set is periodic so measurements can start at any time instance. For the present invention, timing is getting more attention since the estimation algorithm requires the observed subset to be orthogonal. In this case, the time it takes before a complete short sequence of say 16 sync symbols is observed is in the range from 16 to 31 sync symbols, and for a short sequence of say 8 sync symbols, in the range from 8 to 15 sync symbols.

Another advantage of using short sequences is that precoding can be used after each short sequence period, thus potentially improving accuracy. There is also an interplay of the precoder, the estimator, and the accuracy of the feedback when multiple periodic short sequences are used before the line enters show-time. There may also be a way to take the effect of the precoder into account by adding correction factors to the received error samples. That way, the precoder could start operating immediately, thereby reducing the magnitude of the error samples and confirming the accuracy of crosstalk estimates obtained through interpolation.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims. For instance, the present invention has been described with main focus on DSL and G.vector. Yet, the applicability of the present invention can be extended to many other multi-channel communication technologies, and to many other transmission schemes for the pilot sequences.

**Claims**

1. **A method** for assigning pilot sequences to communication channels for further evaluation of crosstalk characteristics there between, and comprising the steps of:

   - selecting **active pilot sequences** (S1; S2; SN) for **active disturber channels** (Ch1; Ch2; ChN) from a set (SET1) of mutually orthogonal pilot sequences of length L,
   - identifying **a joining disturber channel** (ChJ) as a communication channel in the process of becoming active, *characterized in that* said method further comprises the step of:
   - selecting **a joining pilot sequence** (SJ) for said joining disturber channel which comprises **at least one sub-sequence** (SSJ,1) of length M lower than L that is orthogonal to respective ones of c**orresponding active sub-sequences** (SS1,1; SS2,1; SSN,1) of length M to be concurrently transmitted as part of said active pilot sequences.

2. **A method** according to claim 1, *characterized in that* said joining pilot **sequence** is a periodic repetition of said at least one sub-sequence.

3. **A method** according to claim 1, *characterized in that* said joining pilot sequence further comprises **an inactive part** (IPJ,1) during which no pilot signal is to be transmitted through said joining disturber channel.

4. **A method** according to any of the preceding claims, *characterized in that* said set of mutually orthogonal pilot sequences and said at least one sub-sequence are derived from a Hadamard matrix.

5. **A method** according to any of the preceding claims, *characterized in that* said method further comprises the steps of:

   - selecting **a further active pilot sequence** for said joining disturber channel from said set of mutually orthogonal pilot sequences,
   - re-assigning said joining pilot sequence to another communication channel in the process of becoming active.

6. **A method** according to claim 3, *characterized in that* said method further comprises the steps of:

   - identifying **a further joining disturber channel** (ChK) as a further communication channel in the process of becoming active,
   - selecting **a further joining pilot sequence** (SK) for said further joining disturber channel which comprises **at least one further sub-sequence** (SSK,1) of length P lower than L that is orthogonal to respective ones of **corresponding active further sub-sequences** (SS1,2; SS2,2; SSN,2) of length P to be concurrently transmitted as part of said active pilot sequences,
   *in that* said further joining pilot sequence further comprises **a further inactive part** (IPK,1; IPK,2) during which no pilot signal is to be transmitted through said further joining disturber channel,
   *and in that* said at least one sub-sequence and said at least one further sub-sequence do not overlap.

7. **A configuration** unit for assigning pilot sequences to communication channels for further evaluation of crosstalk characteristics there between, and comprising:

   - **a selector** (116) adapted to select **active pilot sequences** (S1; S2; SN) for **active disturber channels** (Ch1; Ch2; ChN) from **a set** (SET1) of mutually orthogonal pilot sequences of length L,
   - **a detector** (114) adapted to identify **a joining disturber channel** (ChJ) as a communication channel in the process of becoming active,
   *characterized in that* said selector is further adapted to select **a joining pilot sequence** (SJ) for said joining disturber channel which comprises **at least one sub-sequence** (SSJ,1) of length M lower than L that is orthogonal to respective ones of **corresponding active sub-sequences** (SS1,1; SS2,1; SSN,1) of length M to be concurrently transmitted as part of said active pilot sequences.

8. **A digital subscriber line access multiplexer** (110) comprising **a configuration unit** according to claim 7.

9. **A mobile base station** comprising **a configuration** unit according to claim 7.

10. **A wireless base station** comprising **a configuration unit according to claim 7.**

11. **An optical network unit** comprising **a configuration** unit according to claim 7.

12. **A network manager** comprising **a configuration** unit according to claim 7.

Fig. 1

Fig. 2

Fig. 3

## EUROPEAN SEARCH REPORT

Application Number

EP 09 29 0107

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | FRANCE TELECOM: "G.vdsl: Update of the channel estimation matrix during the insertion of a new user" ITU-T STUDY GROUP 15 - CONTRIBUTION 511; COM 15 - C 511 - E,, vol. COM 15 - C 511 - E, 1 May 2007 (2007-05-01), pages 1-4, XP002505925 | 1,4,5, 7-12 | INV. H04L5/00 H04B3/32 |
| A | * the whole document * | 2,3,6 | |
| Y | UPZIDE LABS: "G.vdsl2: Pilot sequence assisted vector channel estimation" ITU-T STUDY GROUP 15 - CONTRIBUTION 177; COM 15 - C 177 - E,, vol. cCOM 15 - C 177 - E, 1 October 2006 (2006-10-01), pages 1-6, XP002505924 | 1,4,5, 7-12 | |
| A | * the whole document * | 2,3,6 | |
| A | EP 1 737 176 A (NTT DOCOMO INC [JP]) 27 December 2006 (2006-12-27) * paragraphs [0025], [0047], [0049], [0050], [0075], [0076], [0079], [0080] * | 1-12 | TECHNICAL FIELDS SEARCHED (IPC)<br>H04L<br>H04B |
| A | US 2004/179627 A1 (KETCHUM JOHN W [US] ET AL) 16 September 2004 (2004-09-16) * paragraphs [0119], [0120], [0131] - [0133], [0218], [0232], [0233] * * figure 6A * | 1-12 | |

-/--

The present search report has been drawn up for all claims

| Place of search | Date of completion of the search | Examiner |
|---|---|---|
| Munich | 30 September 2009 | Ferrari, Jeannot |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EUROPEAN SEARCH REPORT**

Application Number

EP 09 29 0107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CENDRILLON R ET AL: "Partial crosstalk precompensation in downstream VDSL" SIGNAL PROCESSING, ELSEVIER SCIENCE PUBLISHERS B.V. AMSTERDAM, NL, vol. 84, no. 11, 1 November 2004 (2004-11-01), pages 2005-2019, XP004591296 ISSN: 0165-1684 chapters 3-5 ----- | 1-12 | |
| A,D | "Very high speed digital subscriber line transceivers 2 (VDSL2); G.993.2 (02/06)" ITU-T DRAFT STUDY PERIOD 2005-2008, INTERNATIONAL TELECOMMUNICATION UNION, GENEVA ; CH, no. G.993.2 (02/06), 17 February 2006 (2006-02-17), XP017404696 chapter 12 ----- | 1-12 | |

TECHNICAL FIELDS
SEARCHED      (IPC)

The present search report has been drawn up for all claims

| Place of search | Date of completion of the search | Examiner |
|---|---|---|
| Munich | 30 September 2009 | Ferrari, Jeannot |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 29 0107

This annex lists the patent family members relating to the patent documents cited in  the above-mentioned European search report.
The members are as contained in the European Patent Office EDP file on
The European Patent Office is in no way liable for these particulars which are merely given for the purpose of information.

30-09-2009

| Patent document cited in search report | | | Publication date | Patent family member(s) | | Publication date |
|---|---|---|---|---|---|---|
| EP 1737176 | A | | 27-12-2006 | JP | 2007020160 A | 25-01-2007 |
| US 2004179627 | A1 | | 16-09-2004 | AU | 2003287297 A1 | 13-05-2004 |
| | | | | BR | 0315536 A | 30-08-2005 |
| | | | | CA | 2501634 A1 | 06-05-2004 |
| | | | | EP | 1556985 A2 | 27-07-2005 |
| | | | | HK | 1084266 A1 | 24-12-2008 |
| | | | | JP | 2006504370 T | 02-02-2006 |
| | | | | KR | 20050061559 A | 22-06-2005 |
| | | | | MX | PA05004393 A | 26-07-2005 |